# EUROPÄISCHE PATENTSCHRIFT

(11) **EP 4 079 673 B1**
(45) Veröffentlichungstag und Bekanntmachung des Hinweises auf die Patenterteilung: **30.10.2024**
(21) Anmeldenummer: 21169128.2
(22) Anmeldetag: 19.04.2021
(51) Int. Cl.: B66C 1/66, F16B 45/00, F16G 15/08, B23G 5/06, B23G 9/00, F16B 25/00

(54) **ABHEBER FÜR GEWINDETRANSPORTANKERSYSTEM**
LIFTER FOR THREADED TRANSPORT ANCHOR SYSTEM
DISPOSITIF DE SOULÈVEMENT POUR LE SYSTÈME D'ANCRAGE DE TRANSPORT À FILETAGE

(43) Veröffentlichungstag der Anmeldung: 26.10.2022
(73) Patentinhaber: Weidner, Georg, 97854 Steinfeld (DE)
(72) Erfinder: Weidner, Georg, 97854 Steinfeld (DE)
(74) Vertreter: Götz, Georg Alois

(56) Entgegenhaltungen:
- DE-U1- 202019 100 478
- FR-A- 1 507 574
- GB-A- 2 579 625
- JP-A- 2005 254 444

## Beschreibung

Die Erfindung betrifft einen Abheber zum Koppeln mit einem Tranksportanker eines Bauteils zum Anheben oder Aufrichten des Bauteils nach dem Oberbegriff des Anspruchs 1. Die Erfindung betrifft außerdem ein Verfahren zum Anheben oder Aufrichten des Bauteils nach dem Oberbegriff des Anspruchs 8, die Verwendung eines Gewindebolzens nach dem Oberbegriff des Anspruchs 9 und die Verwendung eines elektrisch, hydraulisch und/oder pneumatisch angetriebenen Werkzeugs nach dem Oberbegriff des Anspruchs 10.

Betonteile werden als Betonfertigbauteile in Betonfertigteilwerken hergestellt und anschließend für den Einbau auf Baustellen transportiert. Zum Transport dieser Betonfertigteile auf die und auf der Baustelle dient ein Transportanker, der in die Betonteile einbetoniert wird und mit externen Transportmitteln in Eingriff bringbar ist. Solche Transportanker können für ein Gewindetransportankersystem eine Verbindungshülse mit einem Innengewinde aufweisen, wobei in die Gewindehülse zum Transport ein Gewindebolzen, Gewindezapfen oder Gewindedorn des externen Transportmittels einschraubbar ist. Eine einfache Lösung zum Verbinden von Transportankern mit externen Transportmitteln sind starre Anschlagmittel, bspw. Transportschlaufen, bei denen der Gewindebolzen einer Befestigungsschraube in den Transportanker eingeschraubt und die Schlaufe anschließend in den Kranhaken eingefädelt wird.

Alternativ kann in die Verbindungshülse auch ein Adapter mit einer Tragöse eingeschraubt werden, in die ein Kranhaken oder ein anderes externes Transportmittel nur noch eingehängt werden muss. Ein solcher Adapter wird auch als Abheber bezeichnet.

Der Abheber koppelt sowohl mit dem Transportanker im Bauteil als auch mit dem externen Transportmittel und überträgt die Last von dem Transportanker auf das Transportmittel. Solche Abheber zum Anheben oder Aufrichten eines Bauteils weisen einen Gewindebolzen oder ein sonstiges Anschlusselement zum Einschrauben in den Transportanker des Gewindetransportankersystems auf. Der Gewindebolzen weist einen Montagekopf mit einem Anschluss zum Drehmoment-übertragenden Koppeln mit einem Innensechskant- oder Maulschlüssel zum Verbinden und Lösen des Gewindebolzens mit dem Transportanker auf. Der Abheber verfügt über ein Anschlagauge als Tragöse zum Einhängen eines externen Transportmittels, bspw. Kranhaken oder Karabiner. Zum Übertragen der Last des Bauteils von dem Montagekopf auf das Anschlagauge ist ein Lastbock oder Anschlagwirbel vorgesehen, der von dem Gewindebolzen durchsetzt ist. Es ist wichtig, dass sich das Anschlagauge optimal zum Transportmittel ausrichten kann. Zu diesem Zweck ist sowohl das Anschlagauge schwenkbar um eine Schwenkachse des Abhebers als auch der Wirbelbock rotierbar um den Gewindebolzen gelagert. Entsprechende Abheber sind im Stand der Technik bekannt (https://www.desetec.de/de/anschlagmittel-anschlagpunkte/yd-081-lastbock-wirbelbock-mit-lastbuegel, https://www.desetec.de/de/anschlagmittel-anschlagpunkte/yds-anschraubwirbel-lastbock, https://www.hebetechnik.com/anschlagpunkte/anschlagwirbel/anschlagwirbel-gueteklasse-10-mitspannbuegel.html, https://www.hebetechnik.com/anschlagpunkte/anschlagwirbel/anschlagwirbel-mit-gelenk-gk-10-typ-plbw-mit-feder.html, jeweils aufgerufen am 19. April 2021).

Aus dem Stand der Technik, nämlich der DE 20 2019 100 478 U1, wird zur Vereinfachung des Einschraubens vorgeschlagen, den Abheber mit einem Sperrriegel auszustatten. Bei Stellung des Sperrriegels in Sperrstellung ist das Drehen des Lastbocks um den Bolzen blockiert, sodass das Anschlagauge als Hebel zum händischen Rotieren der Schraube verwendet werden und ein zusätzliches Werkzeug entfallen kann.

In der FR 1 507 574 A wird ein Abheber zum Koppeln mit einem Transportanker offenbart, entsprechend dem ersten Teil (Oberbegriff) des Anspruchs 1. Die Kopplung erfolgt mittels Einschraubens eines Gewindebolzens mittels eines Werkzeugs in eine frei zugängliche Hülse des Transportankers.

Zur Reparatur eines beschädigten Schraub-Innengewindes ist es aus der JP 2005 254444 A bekannt, einen Gewindebohrer in Schraubenform einzusetzen, dessen Gewindeteil mit dem Innengewinde verschraubt werden kann. Zum Drehen und Einschrauben des Gewindebohrers ist ein manuell zu betätigendes , lang gestrecktes Werkzeug mit einer Eingriffs-Ausnehmung für den Gewindebohrer gezeigt.

GB 2 579 625 A offenbart ein Verankerungsgerät in Form eines schraubbaren Ringbolzens mit Außengewinde zur Verankerung in einer Mauer. Dazu wird zunächst in ein vorgebohrtes Mauerloch ein elastischer Kunststoffeinsatz eingeführt. Dann wird der Ringbolzen mittels eines per Hand bedienenbaren, elektrisch angetriebenen Schraubendrehers in das mit dem Kunststoffmaterial ausgefüllte Bohrloch eingeschraubt. Der Kunststoffeinsatz wird beim Einschrauben des Ringbolzens verformt, wobei der Einsatz Druck gegen die Bohrlochwandung ausübt, was für eine verstärkte Verankerung des Ringbolzens in der Mauer sorgt. Die im Stand der Technik gezeigten Vorrichtungen bringen allerdings auch Nachteile mit sich. Das Einschrauben des Gewindebolzens mit den im Stand der Technik verwendeten Werkzeugen ist zeitaufwendig. Ein weiteres Problem ist, dass die Gewindehülsen der Transportanker oftmals schwergängig ausgebildet sind und zusätzlich beim Betoniervorgang des Bauteils verschmutzen, nachdem der Beton ausgehärtet ist. Die Gewinde der Transportanker sind unter Umständen nicht mehr funktionsfähig. Auch besteht die Gefahr, dass Gewindebolzen und Gewindehülsen nicht optimal fluchten. Gerade unter Zeitdruck kommt es vor, dass der Werker nicht auf eine ausreichende Eindrehtiefe des Gewindeankers in die Gewindehülse achtet. Es passieren regelmäßig Unfälle, bei denen der Gewindebolzen aus der Gewindehülse ausgerissen wird und die angehobenen Bauteile zu Boden stürzen. Bei einem Schrägzug besteht zusätzlich die Gefahr eines Ausreißens des Transportankers aus dem anzuhebenden Bauteil.

Es ist die Aufgabe der vorliegenden Erfindung, die Nachteile aus dem Stand der Technik zu eliminieren und einen Abheber für ein Gewindetransportankersystem bereitzustellen, der sich schnell und sicher mit einer Gewindehülse eines Transportankers verbinden lässt.

Die Aufgabe wird gelöst durch einen Abheber gemäß Anspruch 1 und eine Verwendung gemäß Anspruch 7. Vorteilhafte Ausführungsformen sind in den Unteransprüchen beansprucht und werden nachfolgend näher erläutert

Die Erfindung betrifft einen Abheber zum Koppeln mit einem Tranksportanker eines Bauteils zum Anheben oder Aufrichten des Bauteils, wobei der Abheber aufweist:
- einen Gewindebolzen oder ein sonstiges Anschlusselement zum Einschrauben des Abhebers in den Transportanker, insbesondere in eine Gewindehülse des Transportankers,
- ein Anschlagauge, eine Tragöse oder eine sonstige Einrichtung zum Einhängen eines externen Transport-, Anschlag- oder Zurrmittels, bspw. Kranhaken oder Karabiner, wobei das Anschlagauge schwenkbar um eine Schwenkachse des Abhebers gelagert ist,
- einen Wirbelbock, einen Lastbock oder ein sonstiges Verbindungselement zum Übertragen einer Last des Bauteils von dem Gewindebolzen auf das Anschlagauge beim Anheben oder Aufrichten, wobei der Wirbelbock um eine Rotationsachse oder Mittelachse des Gewindebolzens drehbar gelagert ist,
- einen Montagekopf zum Verbinden und Lösen des Gewindebolzens mit dem Transportanker, wobei der Montagekopf eine Aufnahme oder einen Anschluss zum Drehmoment-übertragenden Koppeln mit einem elektrisch, hydraulisch und/oder pneumatisch angetriebenen Werkzeug aufweist.

Erfindungsgemäß weist der Gewindebolzen einen Außengewindeabschnitt mit einem Außengewinde auf, wobei das Außengewinde als Gewindenachschneider, Gewindereiniger und/oder Gewindebohrer ausgebildet ist.

Das heißt, das Außengewinde weist ganz oder teilweise Schneiden, Zähne oder sonstige Vorrichtungen zum spanabhebenden oder verformenden Bearbeiten einer Gewindehülse auf. In anderen Worten, der Gewindeabschnitt des Abhebers ist so gestaltet, dass er ggf. unter Verwendung zusätzlichen Schneidöls die Funktion eines Gewindenachschneiders, eines Gewindereinigers oder sogar eines Gewindebohrers erfüllen könnte. Ein separates Nachbearbeiten einer beschädigten oder verunreinigten Gewindehülse entfällt damit, vielmehr kann mit einem Arbeitsgang das Nacharbeiten des Gewindes im Transportankers und das Eindrehen des Abhebers erfolgen. Das Gewinde kann quasi mit dem Abheber in den im Bauteil eingebauten Transportanker eingeschnitten oder nachgeschnitten werden.

Die Verwendung eines Akkuschraubers oder einer sonstigen elektrisch, hydraulisch und/oder pneumatisch angetriebenen Maschine als Werkzeug ist eine besonders wirtschaftliche Lösung. Zweckmäßig wird der erfindungsgemäße Abheber des Gewindetransportankersystems mittels einer Maschine, bspw. einem Akkuschrauber, in den Transportanker eingedreht. Dazu hat der Abheber eine Aufnahme oder einen Anschluss für ein solches Werkzeug. Der Gewindebolzen hat zwei Möglichkeiten, zum Eindrehen und Herausdrehen des Abhebers angetrieben zu werden. Ein Montagekopf, der mit dem Gewindebolzen rotationsstarr verbunden ist, bspw. als Schraubenkopf, weist eine Werkzeugaufnahme mit einem Sechskantkopf oder einer Sechskantvertiefung auf. Das Werkzeug weist einen Bit oder sonstigen Anschluss auf, der komplementär zu der Aufnahme im Montagekopf ausgebildet ist. In anderen Worten, Vater/Mutter des Werkzeugs sind jeweils komplementär zu Vater/Mutter des Montagekopfes ausgebildet. Das Werkzeug wird zur Übertragung der Rotation lösbar mit dem Montagekopf gekoppelt. Die Aufnahmen des Montagekopfes sind so ausgebildet, dass alle Abheber von der kleinsten bis zur höchsten Laststufe des Transportankersystems mit demselben Werkzeug, in den Transportanker, ein- und herausgeschraubt werden können.

Das Anschlagauge des Abhebers für den Kettenhaken bzw. Kranhaken kann durch Schwenken um die Schwenkachse zur Seite bewegt werden. Dadurch kann ein Ackuschrauber direkt auf dem Montagekopf des Gewindebolzens angesetzt werden, um den Gewindeabschnitt des Gewindebolzens in das Muttergewinde der Gewindehülse zeitsparend einzudrehen, selbst wenn das Gewinde des Transportankers schwergängig ist. Durch ein ausreichend eingestelltes Drehmoment des Ackuschraubers kann der Gewindebolzen vollständig eingedreht werden. Der Werker braucht deshalb bspw. zum Eindrehen der Anschlagmittel, bei der Montage auf der Baustelle, nur das eine Bit für seinen Akkuschrauber oder sein hydraulisch, elektrisch oder pneumatisch angetriebenes Werkzeug. Das Eindrehen des Gewindebolzens von Hand benötigt die sechsfache Zeit verglichen mit der Verwendung eines Akkuschraubers. Durch Verwendung eines Akkuschraubers entfällt auch das Problem, dass zur Montage per Hand oftmals der nötige Platz fehlt, um bspw. den Handgriff eines Maulschlüssels bequem zu rotieren. Insbesondere behindern die Gelenke des Abhebers nicht mehr beim Eindrehen des Gewindebolzens. Durch die Verwendung eines elektrisch, hydraulisch und/oder pneumatisch angetriebenen Werkzeugs und die daraus resultierende Zeitersparnis und erhöhte Betriebssicherheit wird die Wettbewerbsfähigkeit von Gewindetransportankersystemen gegenüber anderen Transportankersystemen verbessert.

In einer bevorzugten Ausführungsform der Erfindung weist der Abheber ein Abstützstück zum Bereitstellen einer Abstützfläche oder sonstigen Anschlagfläche mit einer Oberfläche des anzuhebenden oder aufzurichtenden Bauteils auf.

Zwischen dem Wirbelbock und dem Transportanker, bzw. zwischen dem Wirbelbock und der Oberfläche des anzuhebenden Bauteils wird ein flächiges Abstützstück angeordnet, welches einen flächigen Kontakt, also eine Abstützfläche mit dem Bauteil ausbildet. Insbesondere bei einem Quer- und/oder Schrägzug wird die Last flächig im Bauteil verteilt und ein Ausreißen des Transportankers verhindert. Die Unfallsicherheit wird durch diese Maßnahme verbessert.

Vorzugsweise weist das Abstützstück eine Bohrung oder einen sonstigen Durchgang auf, wobei die Bohrung oder der sonstige Durchgang von dem Gewindebolzen durchsetzt ist.

Das Abstützstück ist in den Abheber wenigstens soweit integriert, dass das Abstützstück nicht verloren gehen kann beim Montieren und Demontieren des Abhebers. Das Abstützstück ist gegenüber dem Gewindebolzen vorzugsweise frei rotierbar gelagert, d.h., die Auflagefläche rotiert beim Eindrehen des Gewindebolzens nicht mit dem Gewindebolzen mit. Dadurch wird die Energie zum Einschrauben des Abhebers minimiert. Alternativ kann die Bohrung einen Innengewindeabschnitt aufweisen, der komplementär zu dem Außengewindeabschnitt des Gewindebolzens ausgebildet ist.

In einer besonders kostengünstigen Weiterbildung ist das Abstützstück als rotationssymmetrischer Abstützkörper, insbesondere als Ringscheibe, ausgebildet.

Transportanker werden häufig nicht bündig mit einer Außenwandung des Betonteils, sondern mit einem Abstand zur Außenwandung, also vertieft im Betonteil angeordnet. Zu diesem Zweck wird zwischen dem Transportanker und einer Verschalungswandung beim Ausgießen einer Verschalung eine Haltescheibe, eine Haftscheibe oder ein sonstiger Aussparungskörper angeordnet (für weitere Merkmale einer vertieften Anordnung wird auf die zum Anmeldezeitpunkt noch unveröffentlichte EP 20 210 558.1 verwiesen). Das Abstützstück ist im Wesentlichen komplementär zu der so hergestellten Aussparung ausgebildet, das Abstützstück weist also in etwa die gleiche Größe, den gleichen Durchmesser und/oder die gleiche bzw. größere Dicke wie die Haltescheibe, Haftscheibe oder der sonstige Aussparungskörper auf, mit welcher der Transportanker beim Herstellen des Bauteils an der Schalung befestigt wurde. Zum einen wird dadurch die Last beim Anheben optimal im Betonteil verteilt und ein Ausreißen des Transportankers verhindert. Zum anderen ist durch den Abstützkörper ein Abheber unverwechselbar zu dem Transportanker der gleichen Laststufe zugeordnet.

In einer optionalen Weiterbildung weist das Abstützstück auf oder im Bereich der Abstützfläche einen Vorsprung auf, wobei der Vorsprung vorzugsweise die Bohrung aufweist.

Abstützstücke mit einem Vorsprung auf der Abstützfläche sind besonders für Bauteile geeignet, bei denen der Transportanker vertieft eingebaut worden ist.

Besonders vorteilhaft ist es, wenn die Schwenkachse des Anschlagauges einen Abstand von der Rotationsachse des Wirbelbocks aufweist. Das heißt, Schwenkachse und Rotationsachse haben keinen Schnittpunkt.

Sind Anschlagmittel wie Tragösen, Anschlagaugen oder Transportschlaufen in einer Flucht mit dem Gewindebolzen angeordnet, so behindern die Anschlagmittel den Werker beim Eindrehen der Abheber. Die Gelenkachsen der Anschlagmittel werden daher mit einem Abstand zur Längsachse bzw. der Gelenkachse des Gewindebolzens angeordnet, damit der Montagekopf des Gewindebolzens frei zugänglich bleibt. Zusätzlich kann das Anschlagauge durch Schwenken um die Schwenkachse weggeklappt werden. Durch die Anordnung einer Schwenkachse mit Abstand zu einer Rotationsachse wird einerseits die optimale Ausrichtung des Abhebers gewährleistet, andererseits wird die Zugänglichkeit des Werkers zum Montagekopf nicht behindert.

Zweckmäßig ist ein Verfahren zum Aufrichten oder Anheben eines Bauteils mit einem Tranksportanker, aufweisend folgende Schritte:
- Bereitstellen eines Abhebers, insbesondere eines Abhebers in einer der bereits beschriebenen Ausführungen, wobei der Abheber mindestens einen Gewindebolzen oder ein sonstiges Anschlusselement zum Einschrauben des Abhebers in den Transportanker, ein Anschlagauge, eine Tragöse oder eine sonstige Einrichtung zum Einhängen eines externen Transport-, Anschlag- oder Zurrmittels, wobei das Anschlagauge schwenkbar um eine Schwenkachse des Abhebers gelagert ist, und einen Montagekopf zum Verbinden und Lösen des Gewindebolzens mit dem Transportanker aufweist,
- Koppeln eines elektrisch, hydraulisch und/oder pneumatisch angetriebenen Werkzeugs mit dem Montagekopf zum Übertragen eines Drehmoments,
- Einhängen des externen Transport-, Anschlag- oder Zurrmittels in das Anschlagauge, die Tragöse oder die sonstige Einrichtung.

Im Rahmen der Erfindung liegt ferner die Verwendung eines Gewindebolzens, aufweisend einen Außengewindeabschnitt mit einem Außengewinde, wobei das Außengewinde als Gewindenachschneider, Gewindereiniger und/oder Gewindebohrer ausgebildet ist zum Koppeln mit einem Transportanker und Anheben oder Aufrichten eines Bauteils.

Die Verwendung eines Gewindebolzens mit den Eigenschaften eines Gewindeschneiders löst das Problem, dass die Gewindehülsen der Transportanker beim Betoniervorgang verschmutzen und die Gewindehülsen nicht mehr funktionsfähig sind, nachdem der Beton erhärtet ist. Um diese Gewindehülsen wieder funktionsgänig bzw. funktionsfähig zu machen, gibt es Nacharbeitungsgewindebohrer bzw. Gewindereiniger. Diese werden in das verschmutzte Gewinde eingedreht und wieder ausgedreht, dann erst kann man den Abheber in den Transportanker eindrehen. Die Verwendung eines Gewindebolzens, ausgebildet als Gewindenachschneider, Gewindereiniger und/oder Gewindebohrer zum Koppeln mit einem Transportanker erspart diesen separaten Reinigungsschritt.

Im Rahmen der Erfindung liegt ferner die Verwendung eines elektrisch, hydraulisch und/oder pneumatisch angetriebenen Werkzeugs zum Koppeln eines Abhebers, und/oder eines externen Transport-, Anschlag- oder Zurrmittels zum Drehmoment-übertragenden Koppeln mit einem Transportanker zum Anheben oder Aufrichten eines Bauteils.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: einen Abheber in perspektivischer Darstellung in einer ersten beispielhaften Ausführungsform der Erfindung, in
- Fig. 2: einen Abheber in perspektivischer Darstellung in einer zweiten beispielhaften Ausführungsform der Erfindung, in
- Fig. 3a: einen Abheber in perspektivischer Darstellung in einer dritten beispielhaften Ausführungsform der Erfindung, in
- Fig. 3b: einen Abheber in perspektivischer Darstellung der dritten beispielhaften Ausführungsform der Erfindung und in
- Fig. 4: eine Anordnung mit einem Abheber und einem Werkzeug in perspektivischer Darstellung in einer beispielhaften Ausführungsform der Erfindung.

Die Figuren sind lediglich beispielhafter Natur und dienen nur dem Verständnis der Erfindung. Die gleichen Elemente sind mit denselben Bezugszeichen versehen.

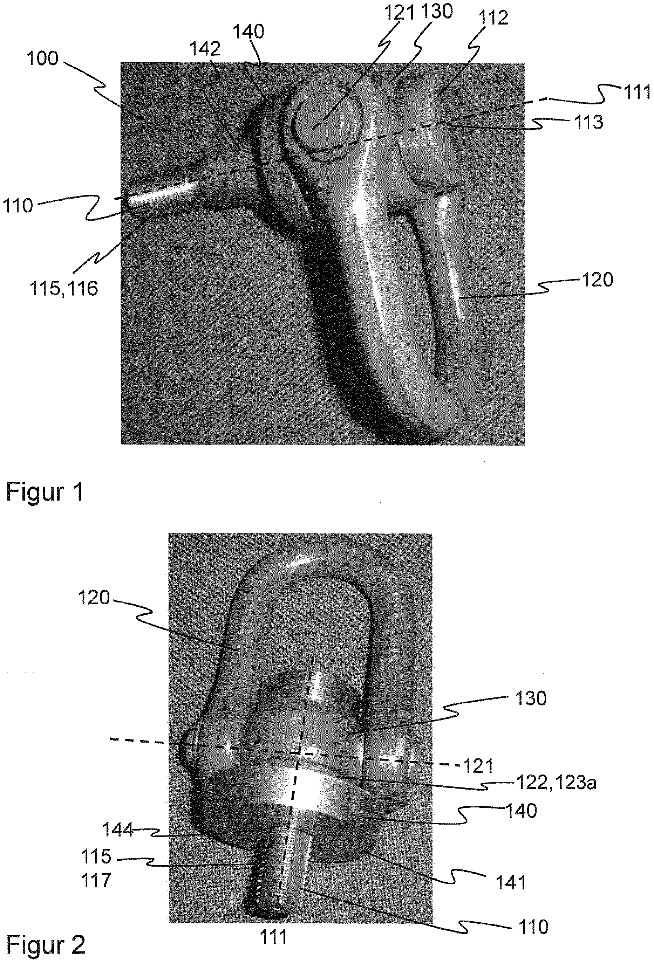

In Figur 1 ist eine erste Ausführungsform eines Abhebers 100 dargestellt. Der Gewindebolzen 110 ist der Schaft, also der Außengewindeabschnitt 115 einer durch den Anschlagwirbel 120 hindurchgeführten Gewindeschraube. Der als Montagekopf 112 dienende Schraubenkopf besitzt eine Vertiefung als Aufnahme 113 für einen Innensechskantschlüssel. Der Wirbelbock 130 weist einen Durchgang auf, der von einem Gewindebolzen 110 durchsetzt ist, sodass ein Gewindeabschnitt 115 (Vatergewinde) mit einem Außengewinde 116 wenigstens abschnittsweise zum Einschrauben in die Gewindehülse (Muttergewinde) eines Transportankers frei zugänglich ist. Vorzugsweise ist der Gewindebolzen 110 um die Rotationsachse 111 bzw. die Längsachse des Gewindeabschnitts 115 im Abheber 100 rotierbar gelagert, quasi ein erstes Gelenk zum Ausrichten des Abhebers 100. Ein Anschlagauge 120 ist um eine Schwenkachse 121 schwenkbar gelagert, quasi ein zweites Gelenk zum Ausrichten des Abhebers 100. Die Schwenkachse 121 verläuft mit einem 90°-Winkel zur Rotationsachse 111, wobei sich Schwenkachse 121 und Rotationsachse 111 schneiden. Der Wirbelbock 130 ist um die Rotationsachse 111 des Gewindebolzens 110 frei drehbar gelagert. Der Abheber 100 ist durch die beiden Gelenke auch im eingeschraubten Zustand nach allen Seiten ausrichtbar und in die gewünschte Position rotierbar. Der Abheber 100 weist ferner ein Abstützstück 140 auf, welches auf den Gewindebolzen 110 aufgeschoben ist zum Bereitstellen einer Abstützfläche 141 oder sonstigen Anschlagfläche mit einer Oberfläche des anzuhebenden Bauteils. Das Abstützstück 140 weist ferner einen Vorsprung 142 oder eine sonstige Verlängerung auf, um im Falle eines vertieften Einbaus der Gewindehülse im Bauteil die Gewindehülse mit dem Abheber 100 zu verbinden.

Der Abheber 100 in Fig. 2 weist gegenüber dem Abheber 100 in Fig. 1 zusätzliche Merkmale auf. Der Wirbelbock 130 weist einen Durchgang auf, der von einer Lagerbuchse 122 durchsetzt ist. Vorzugsweise ist der Gewindebolzen 110 in der Lagerbuchse 122 frei um die Rotationsachse 111 rotierbar gelagert. Lagerbuchse 122 und Wirbelbock 130 rotieren nicht, während der Gewindebolzen 110 eingeschraubt wird. Der Gewindebolzen 110 ist in dem Wirbelbock 130 durch den Halteflansch 123a der Lagerbuchse 122 gegen eine axiale Verschiebung entlang der Rotationsachse 111 gesichert. Das Abstützstück 140 weist als rotationssymmetrischer Abstützkörper 143 eine Abstützfläche 141 als Kreisringscheibe auf. Das Abstützstück 140 weist eine Bohrung 144 auf, wobei die Bohrung 144 von dem Gewindebolzen 110 durchsetzt ist. Der Außengewindeabschnitt 115 ist entsprechend einem Gewindenachschneider 117 ausgebildet.

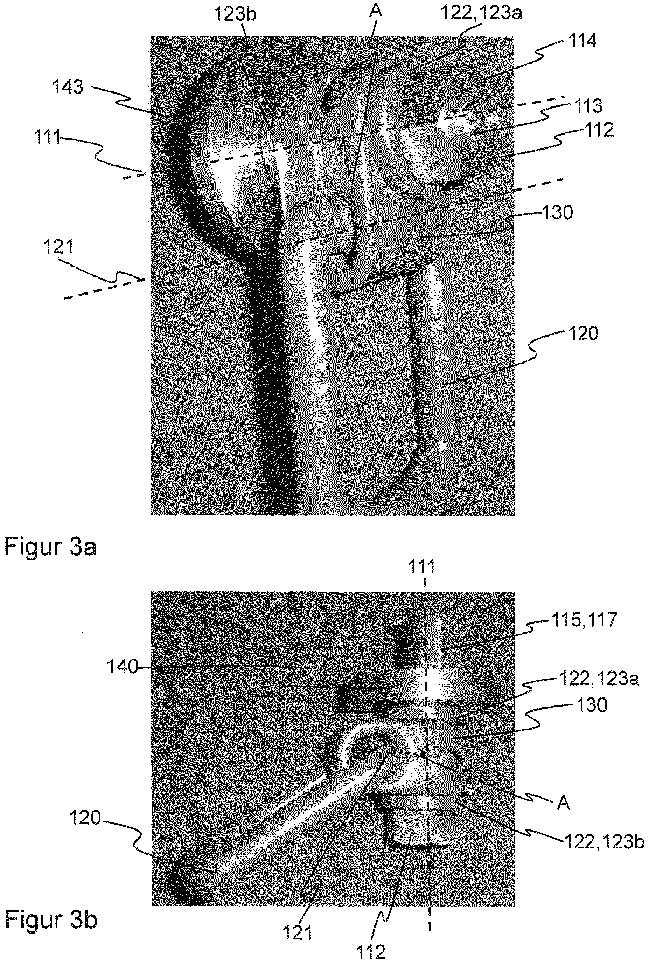

Der Abheber 100 gemäß Fig. 3a und 3b zeigt einen Schraubenkopf als Montagekopf 112. Der Schraubenkopf besitzt einen Innensechskant 113 und einen Außensechskant 114 als Anschluss und kann bspw. mit einem komplementären Außensechskantbit oder einem Innensechskantbit eines Akkuschraubers rotiert werden. Auch dieser Abheber 100 ist quasi mehrgelenkig ausgebildet, wobei der Abheber 100 um die Rotationsachse 111 und zusätzlich das Anschlagauge 120 um die Schwenkachse 121 rotierbar ist. Damit das Anschlagauge 120 die Rotationsachse 111 und damit den Zugang für ein Werkzeug 200 zum Montagekopf 112 nicht überdeckt, ist die Schwenkachse 121 mit einem Abstand A zur Rotationsachse 111 angeordnet. Der Gewindebolzen 110 ist in der Lagerbuchse 122 frei um die Rotationsachse 111 rotierbar gelagert. Der Gewindebolzen 110 ist in dem Wirbelbock 130 durch die Halteflansche 123a,123b der Lagerbuchse 122 gegen eine axiale Verschiebung entlang der Rotationsachse 111 gesichert.

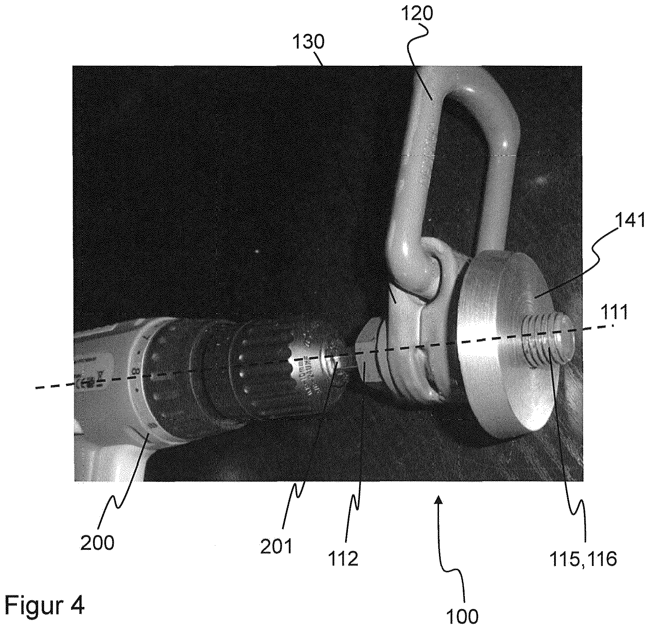

Fig. 4 zeigt eine Anordnung mit einem Abheber 100 und einem Akkuschrauber 200 als elektrisch angetriebenes Werkzeug 200. Der Bit 201 des Akkuschraubers 200 hat freien Zugang zum Montagekopf 112 des Abhebers 100. Die Verwendung eines elektrisch angetriebenen Werkzeug 200 löst das Problem, dass die Eindringtiefe bei einem Eindrehen bei Hand nicht ausreicht, insbesondere wenn der Außengewindeabschnitt 115 des Gewindebolzens 110 nicht mit der Gewindehülse des Transportankers optimal fluchtet, d.h. nicht senkrecht direkt über dem in das Bauteil eingegossenen Muttergewinde anordenbar ist.

### Bezugszeichenliste

- 100: Abheber
- 110: Gewindebolzen
- 111: Längsachse, Rotationsachse
- 112: Montagekopf
- 113: Aufnahme oder Anschluss für Innensechskantschlüssel
- 114: Aufnahme oder Anschluss für Maulschlüssel
- 115: Außengewindeabschnitt
- 116: Außengewinde
- 117: Außengewinde als Gewindenachschneider, Gewindereiniger, Gewindebohrer
- 120: Anschlagauge, Tragöse
- 121: Schwenkachse
- 122: Lagerbuchse
- 123a,b: Halteflansch
- 130: Wirbelbock, Lastbock, Anschlagwirbel
- 140: Abstützstück
- 141: Abstützfläche
- 142: Verlängerungsabschnitt, -vorsprung
- 143: Abstützkörper
- 144: Bohrung
- 200: Werkzeug, insbesondere Akkuschrauber
- 201: Bit
- A: Abstand

## Patentansprüche

1. Abheber (100) zum Koppeln mit einem Tranksportanker eines Bauteils zum Anheben oder Aufrichten des Bauteils, wobei der Abheber (100) aufweist:
- einen Gewindebolzen (110) mit einem Außengewindeabschnitt (115) mit Außengewinde (117) zum Einschrauben des Abhebers (100) in den Transportanker, insbesondere in eine Gewindehülse des Transportankers,
- ein Anschlagauge (120), eine Tragöse oder eine sonstige Einrichtung zum Einhängen eines externen Transport-, Anschlag- oder Zurrmittels, wobei das Anschlagauge (120) schwenkbar um eine Schwenkachse (121) des Abhebers (100) gelagert ist,
- einen Wirbelbock (130), einen Lastbock oder ein sonstiges Verbindungselement zum Übertragen einer Last des Bauteils von dem Gewindebolzen (110) auf das Anschlagauge (120), wobei der Wirbelbock (130) um eine Rotationsachse (111) oder Mittelachse des Gewindebolzens (110) rotierbar gelagert ist, und
- einen Montagekopf (112) zum Verbinden und Lösen des Gewindebolzens (110) mit dem Transportanker, und der Montagekopf (112) eine Aufnahme (113,114) zum Drehmoment-übertragenden Koppeln mit einem elektrisch, hydraulisch und/oder pneumatisch angetriebenen Werkzeug (200) aufweist,
**dadurch gekennzeichnet, dass**
das Außengewinde (117) des Gewindebolzens als Gewindenachschneider, Gewindereiniger und/oder Gewindebohrer ausgebildet ist.

2. Abheber (100) nach Anspruch 1,
**dadurch gekennzeichnet, dass**
der Abheber (100) ein Abstützstück (140) zum Bereitstellen einer Abstützfläche (141) oder sonstigen Anschlagfläche mit einer Oberfläche des anzuhebenden oder aufzurichtenden Bauteils aufweist.

3. Abheber (100) nach Anspruch 2,
**dadurch gekennzeichnet, dass**
das Abstützstück (140) eine Bohrung (144) oder einen sonstigen Durchgang aufweist, wobei die Bohrung (144) oder der sonstige Durchgang von dem Gewindebolzen (110) durchsetzt ist.

4. Abheber (100) nach einem der Ansprüche 2 oder 3,
**dadurch gekennzeichnet, dass**
das Abstützstück (140) als rotationssymmetrischer Abstützkörper (143), insbesondere als Ringscheibe, ausgebildet ist.

5. Abheber (100) nach einem der Ansprüche 2-4,
**dadurch gekennzeichnet, dass**
das Abstützstück (140) auf oder im Bereich der Abstützfläche (141) einen Vorsprung (142) aufweist, wobei der Vorsprung (142) vorzugsweise die Bohrung (144) aufweist.

6. Abheber (100) nach einem der vorhergehenden Ansprüche,
**dadurch gekennzeichnet, dass**
die Schwenkachse (121) des Anschlagauges (120) einen Abstand (A) von der Rotationsachse (111) des Wirbelbocks (130) aufweist.

7. Verwendung eines Gewindebolzens (110), aufweisend einen Außengewindeabschnitt (115) mit einem Außengewinde (117), wobei das Außengewinde (117) als Gewindenachschneider, Gewindereiniger und/oder Gewindebohrer ausgebildet ist, zum Koppeln mit einem Transportanker zum Anheben oder Aufrichten eines Bauteils.

8. Verwendung nach Anspruch 7, wobei der Gewindebolzen (110) in einem Abheber nach einem der Ansprüche 1-7 eingesetzt wird.

## Claims

1. Lifter (100) for coupling to a transport anchor of a component for lifting or erecting the component, the lifter (100) having:
- a threaded bolt (110) with an externally threaded section (115) with an external thread (117) for screwing the lifter (100) into the transport anchor, in particular into a threaded sleeve of the transport anchor,
- a lifting eye (120), a lifting eyelet or another device for suspending an external transport, lifting or lashing means, wherein the lifting eye (120) is pivotably mounted about a pivot axis (121) of the lifter (100),
- a stop swivel (130), a load bracket or another connecting element for transferring a load of the component from the threaded bolt (110) to the lifting eye (120), wherein the stop swivel (130) is mounted rotatably about an axis of rotation (111) or centre axis of the threaded bolt (110), and
- an assembly head (112) for connecting and disconnecting the threaded bolt (110) to the transport anchor, and the assembly head (112) comprises a receptacle (113, 114) for torque-transmitting coupling with an electrically, hydraulically and/or pneumatically driven tool (200),
**characterised in that**
the external thread (117) of the threaded bolt is designed as a thread recutter, thread cleaner and/or thread tap.

2. Lifter (100) according to claim 1,
**characterised in that**
the lifter (100) has a support piece (140) for providing a support surface (141) or other stop surface with a surface of the component to be lifted or erected.

3. Lifter (100) according to claim 2,
**characterised in that**
the support piece (140) has a bore (144) or another passage, the bore (144) or the other passage being penetrated by the threaded bolt (110).

4. Lifter (100) according to one of claims 2 or 3,
**characterised in that**
the support piece (140) is designed as a rotationally symmetrical support body (143), in particular as an annular disc.

5. Lifter (100) according to one of claims 2-4,
**characterised in that**
the support piece (140) has a projection (142) on or in the region of the support surface (141), the projection (142) preferably having the bore (144).

6. Lifter (100) according to one of the preceding claims,
**characterised in that**
the pivot axis (121) of the lifting eye (120) has a distance (A) from the axis of rotation (111) of the stop swivel (130).

7. Use of a threaded bolt (110), having an external threaded section (115) with an external thread (117), the external thread (117) being designed as a thread recutter, thread cleaner and/or thread tap, for coupling with a transport anchor for lifting or erecting a component.

8. Use according to claim 7, wherein the threaded bolt (110) is inserted in a lifter according to one of claims 1-7.

## Revendications

1. Dispositif de levage (100) destiné à être couplé à une ancre de transport d'un élément de construction pour soulever ou redresser l'élément de construction, le dispositif de levage (100) comprenant :
- un boulon fileté (110) avec un tronçon fileté extérieurement (115) avec un filetage extérieur (117) pour visser le dispositif de levage (100) dans l'ancre de transport, en particulier dans une douille filetée de l'ancre de transport,
- un oeillet de butée (120), un anneau de suspension ou un autre dispositif pour accrocher un moyen de transport, de butée ou d'arrimage externe, l'œillet de butée (120) pouvant pivoter autour d'un axe de pivotement (121) du dispositif de levage (100),
- un support rotatif (130), un support de charge ou un autre élément de liaison pour transmettre une charge de l'élément de construction depuis le boulon fileté (110) jusqu'à l'œillet de butée (120), le support rotatif (130) étant agencé de manière à pouvoir tourner autour d'un axe de rotation (111) ou d'un axe central du boulon fileté (110), et
- une tête de montage (112) pour assembler et désassembler le boulon fileté (110) avec l'ancre de transport, et la tête de montage (112) comporte un logement (113, 114) pour le couplage de transmission de couple avec un outil (200) à entraînement électrique, hydraulique et/ou pneumatique,
**caractérisé en ce que**
le filetage extérieur (117) du boulon fileté est réalisé sous la forme d'un outil de post-taraudage, d'un nettoyeur de filetage et/ou d'un taraud.

2. Dispositif de levage (100) selon la revendication 1,
**caractérisé en ce que**
le dispositif de levage (100) comprend une pièce d'appui (140) destinée à fournir une surface d'appui (141) ou autre surface de butée pour une surface de l'élément de construction à soulever ou à redresser.

3. Dispositif de levage (100) selon la revendication 2,
**caractérisé en ce que**
la pièce d'appui (140) comprend un alésage (144) ou un autre passage traversant, l'alésage (144) ou l'autre passage traversant étant traversé par le boulon fileté (110).

4. Dispositif de levage (100) selon l'une des revendications 2 ou 3,
**caractérisé en ce que**
la pièce d'appui (140) est réalisée sous la forme d'un corps d'appui (143) à symétrie de rotation, en particulier sous la forme d'un disque annulaire.

5. Dispositif de levage (100) selon l'une quelconque des revendications 2 à 4,
**caractérisé en ce que**
la pièce d'appui (140) comprend une saillie (142) sur ou dans la zone de la surface d'appui (141), la saillie (142) comprenant de préférence l'alésage (144).

6. Dispositif de levage (100) selon l'une quelconque des revendications précédentes, **caractérisé en ce que**
l'axe de pivotement (121) de l'œillet de butée (120) est à une distance (A) de l'axe de rotation (111) du support rotatif (130).

7. Utilisation d'un boulon fileté (110), présentant une section filetée extérieurement (115) avec un filetage extérieur (117), le filetage extérieur (117) étant réalisé sous la forme d'un outil de post-taraudage, d'un nettoyeur de filetage et/ou d'un taraud, pour l'accouplement avec une ancre de transport pour le levage ou le redressement d'un élément de construction.

8. Utilisation selon la revendication 7, dans laquelle le boulon fileté (110) est utilisé dans un dispositif de levage selon l'une quelconque des revendications 1 à 6.
